# EUROPÄISCHE PATENTSCHRIFT

(11) **EP 2 221 164 B1**
(45) Veröffentlichungstag und Bekanntmachung des Hinweises auf die Patenterteilung: **05.10.2011**
(21) Anmeldenummer: 10151022.0
(22) Anmeldetag: 19.01.2010
(51) Int. Cl.: B29C 65/02, B29C 65/10, E04D 1/36, E04D 13/17, B29C 65/00, B29C 65/74

(54) **First- und Gratrolle mit zwei Bahnen, die mit einer verschweissten Naht aus thermoplastischem Garn verbunden werden**
Strip for covering ridges and arris comprising two sheets, which are connected via a welded seam of thermoplatic yarn
Band pour la couverture de crête et arête avec deux feuilles qui sont unifiées avec un joint soudé du fil thermoplastique

(30) Priorität: 20.02.2009 DE 102009001040
(43) Veröffentlichungstag der Anmeldung: 25.08.2010
(73) Patentinhaber: Casaproof GmbH, 51381 Leverkusen (DE)
(72) Erfinder: Bischoff, Achim, 42799 Leichlingen (DE)
(74) Vertreter: Gille Hrabal Struck Neidlein Prop Roos

(56) Entgegenhaltungen:
- EP-A1- 0 521 755
- EP-A2- 0 346 242
- DE-A1- 19 742 442
- DE-A1-102005 004 914
- DE-A1-102005 010 045
- DE-U1- 20 115 119
- DE-U1- 20 313 028
- DE-U1- 29 819 431
- DE-U1- 29 912 644
- DE-U1-202004 017 394

## Beschreibung

Die Erfindung betrifft ein First- und Gratband, also eine Vorrichtung zum Bedecken und/ oder Abdichten von Firsten und Graten von Dächern. Die Erfindung betrifft ferner eine Verbindung für ein First- und Gratband sowie ein Verfahren zur Herstellung der Verbindung. Ein First- und Gratband umfasst miteinander verbundene Materialbahnen. In der Regel gibt es eine mittlere, luftdurchlässige, aus einem Kunststoffgewebe bestehende Bahn, an der zwei biegsame metallische Bahnen seitlich befestigt sind. Die metallischen Bahnen weisen wellenförmige Profilierungen auf. Die Unterseiten der metallischen Bahnen sind mit einem Streifen aus Butyl oder Bitumen versehen, um die metallischen Bahnen mit einem Dach dicht verbinden zu können.

Die Druckschrift EP 0 911 459 B1 offenbart ein First- und Gratband mit einer mittleren Bahn und daran seitlich angebrachten, gewellten Außenbahnen. Die mittlere Bahn weist lösbar fixierte Falten auf, um so das First- und Gratband an gewünschte Breiten anpassen zu können.

Aus der Druckschrift DE 299 1 2 644 U1 ist ein First- und Gratband bekannt, das eine luftdurchlässige, wasserabweisende Bahn umfasst. An beiden Längsseiten dieser Bahn sind luftundurchlässige, aus Metall bestehende Streifen bzw. Außenbahnen angebracht. Die Außenbahnen sind wellenförmig geformt und biegsam, um diese an die Kontur von Dachpfannen und Dachziegeln anpassen zu können. Die luftdurchlässige, wasserabweisende mittlere Bahn besteht aus einem Gewebe aus Glasfasern oder aus aus Polypropylen bestehenden Fasern. Die Seitenbahnen bzw. Außenbahnen sind aus Aluminium, Kupfer oder Blei hergestellt. Um die mittlere Bahn mit den beiden aus Metall bestehenden Außenbahnen dauerhaft miteinander zu verbinden, sind diese miteinander vernäht.

Um mit hoher Geschwindigkeit von bis zu 12 Meter pro Minute vernähen zu können, müssen die verwendeten Garne mit Öl getränkt werden, wie der deutschen Patentanmeldung 102008000556.8 zu entnehmen ist.

Eine Naht verbindet die Bahnen eines First- und Gratbandes sehr zuverlässig miteinander. Eine solche Verbindung widersteht vor allem auch den sehr unterschiedlichen Witterungsbedingungen, denen ein First- und Gratband ausgesetzt wird. Wird eine Naht allerdings an einer Stelle beschädigt, so können sich nachteilhaft auch weitere, an die beschädigte Stelle angrenzende Bereiche der Naht über lange Strecken lösen. Eine betroffene Außenbahn löst sich dann von der luftdurchlässigen, mittleren Bahn, so dass die First- und Gratrolle über die entsprechende Länge nicht mehr ihren Zweck erfüllt.

Die Druckschrift WO 95/09287 offenbart eine Abdeckung für Bauwerke aus Metall-Kunststoff-Verbundmaterial, bei der Falten am Rand durch Schweißen mit Ultraschall oder Hochfrequenz oder durch Kleben miteinander verbunden werden. Wird eine solche stoffschlüssige Verbindung an einer Stelle beschädigt, so wirkt sich dies zwar nicht nachteilhaft auf benachbarte Bereiche aus. Allerdings ist eine solche stoffschlüssige Verbindung im Vergleich zu einer Nahtverbindung instabiler.

Aus der Druckschrift DE 299 12 644 U1 ist auch bekannt, andere formschlüssige Verbindungsmittel wie Nieten vorzusehen. Allerdings haben sich derartige Verbindungen als zu teuer erwiesen, um über große Strecken zwei Bahnen miteinander zu verbinden.

Aus der Druckschrift DE 299 12 644 U1 ist außerdem bekannt, zwei Bahnen miteinander zu verkleben. Allerdings ist bereits der DE 299 12 644 U1 zu entnehmen, dass solche Verbindungen auf Dauer nicht haltbar genug sind, was vor allem daran liegt, dass First- und Gratbänder stark wechselnden Wetterbedingungen und Hitzestaus ausgesetzt sind.

Aus der Druckschrift DE 10 2000 5010045 ist ein Dachentlüftungselement mit Trägerschicht und Außenrandbereichen bekannt, die miteinander verbunden sind. Die Verbindung kann eine Kombination von Nähen und Kleben sein.

Aus der Druckschrift DE 197 42 442 A1 ist eine Vorrichtung zum Verschweißen von Folien bekannt. In einer frei strahlenden Elektrode wird eine Hochspannungsentladung erzeugt. Das dabei entstehende Plasma wird mittels eines Luftstroms auf den zu verbindenden Fügebereich gelenkt, so dass dadurch eine Schmelzverbindung im Fügebereich entsteht.

Die Druckschrift DE 198 28 721 A1 offenbart einen aufrollbaren Dichtungsstreifen für eine First- oder Gratabdeckung, also ein First- und Gratband, das eine mittlere Bahn und zwei an die mittlere Bahn angrenzende Seitenbahnen aufweist. Die aus Kunststoff bestehende mittlere Bahn wird abschnittsweise oder vollständig durch eine Ultraschallbehandlung oder aber mit temperierbaren Prägewalzen verfestigt.

Auf der Internetseite http://www.afs.biz/common/uploads/infomaterial/ Allgemeines%20zur%20Corona-D.pdf wird eine Corona-Vorbehandlung beschrieben, um Kunststoff-, Metall- und Papieroberflächen zu verändern, damit auf diesen behandelten Oberflächen andere Materialien wie z.B. Farbe oder Klebstoff verbessert haften. Die vorzubehandelnden Materialien werden dazu zwischen die Elektroden einer für die jeweilige Anwendung speziell ausgeführten Elektrode gebracht. Durch das Anlegen einer ausreichend hohen Wechselspannung bildet sich zwischen den Elektroden eine Gleitentladung aus, die so stark ist, dass die Umgebungsluft ionisiert wird und ein Plasma entsteht. Die Ionen in diesem Plasma bewegen sich, abhängig von der Stromrichtung, zwischen den Elektroden hin und her. Treffen diese Ionen auf das vorzubehandelnde Material, bewirken sie an der Oberfläche Veränderungen: Es werden Krater in die Oberfläche eingeschmolzen, die so klein sind, dass sie nur unter dem Elektronenmikroskop sichtbar sind. Diese Krater bewirken eine Vergrößerung der Oberfläche und damit eine höhere Haftungsbereitschaft zu anderen Materialien. Durch das Auftreffen von energiereichen Teilchen auf die Oberfläche werden die langfädigen Polymerketten an der Kunststoffoberfläche gecrackt (aufgespalten). Die so entstehenden ungesättigten Verbindungen sind bereit, mit anderen Materialien eine dauerhafte chemische Bindung einzugehen. Eine solche Vorbehandlung kann dazu genutzt werden, um stoffschlüssige Verbindungen zu stabilisieren.

Aus der Fügetechnik für Metalle ist bekannt, zwei Metalle durch Plasmaschweißen miteinander zu verbinden. Beim Plasmaschweißen bildet sich ein Lichtbogen zwischen einer nicht abschmelzenden Elektrode und dem Grundwerkstoff aus, der als Gegenelektrode dient. Beim Plasmaschweißen werden Schutzgase benötigt.

Es ist Aufgabe der vorliegenden Erfindung, ein First- und Gratband mit einer im Vergleich zum Stand der Technik verbesserten Verbindung zwischen einzelnen Bahnen schaffen zu können.

Die Aufgabe wird durch ein First- und Gratband mit den Merkmalen des Anspruchs 1 gelöst. Eine Verbindung für ein First- und Gratband umfasst die Merkmale eines ersten Nebenanspruchs. Ein Herstellungsverfahren umfasst die Merkmale des weiteren Nebenanspruchs.

Zur Lösung der Aufgabe wird ein First- und Gratband bereitgestellt, welches wenigstens zwei miteinander verbundene Materialbahnen umfasst. Überlappende Bereiche der beiden Materialbahnen werden zunächst miteinander vernäht, wie dies bereits aus dem deutschen Gebrauchsmuster 299 12 644 U1 bekannt ist. Im Unterschied zum aus dem deutschen Gebrauchsmuster 299 12 644 U1 bekannten Stand der Technik wird das für das Vernähen eingesetzte Garn zumindest abschnittsweise entlang der gesamten Naht mit angrenzenden Bereichen stoffschlüssig verbunden und zwar insbesondere durch Verschmelzen oder Verschweißen. Entlang der gesamten Naht bedeutet, dass sich die miteinander verschmolzenen oder verschweißten Bereiche nicht auf einen kurzen Abschnitt der Naht beschränken, sondern am Anfang einer Naht, am Ende einer Naht sowie wiederkehrend zwischen Anfang und Ende vorhanden sind. Es werden so einerseits die Vorteile einer Nahtverbindung erzielt, die sich als hinreichend haltbar erwiesen hat. Durch die stoffschlüssige Verbindung zwischen Garn und einem anderen Bereich wird ergänzend erreicht, dass eine lokale Beschädigung der Naht nicht dazu führen kann, dass sich die Naht über darüber hinaus löst und so die Verbindung zwischen den betroffenen Bahnen gelöst wird. Statt dessen kann sich die Naht nur lösen, wenn es kurze angerenzende mit Garn Abschnitte gibt, welche keine stoffschlüssige Befestigungen des Garns der Naht umfassen. Solche Nahtabschnitte sind im allgemeinen nur wenige Millimeter lang. Da zumindest in kurzen Abständen entlang der Naht die stoffschlüssige Befestigung des Garns vorgesehen ist, kann sich die Nahtverbindung entlang größerer Abschnitte auch nicht aufgrund einer lokalen Beschädigung lösen.

Zwar kann ein Garn auch durch einen Klebstoff stoffschlüssig anspruchsgemäß befestigt werden. Allerdings sind damit verschiedene Nachteile verbunden, und zwar unter anderem, dass der Klebstoff einen zusätzlichen Materialaufwand bedeutet.

Die Bereiche bzw. Abschnitte der Naht, die eine stoffschlüssige Befestigung des Garns umfassen, erstrecken sich in einer Ausführungsform der Erfindung insgesamt über eine größere Länge als die Gesamtlänge, die sich aus den dazwischen liegenden Bereichen der Naht ergibt, die kein Garn mit stoffschlüssiger Befestigung aufweisen, um so besonders zuverlässig sicherzustellen, dass lokale Beschädigungen der Naht die Verbindung nicht gefährden können. Die Naht umfasst dann also überwiegend Abschnitte mit stoffschlüssig befestigtem Garn.

Durch das Nähen ist es möglich, zwei Bahnen mit einer Geschwindigkeit von bis zu 12 m/ sec miteinander formschlüssig zu verbinden, wobei eine Bahn aus Metall bestehen kann. Besteht eine Bahn aus Metall, so muss das Garn grundsätzlich mit Öl getränkt werden, um ein Reißen des Garns während des Nähens zu vermeiden.

Ein Garn mit Öl zu tränken, um es anschließend zu verschweißen, ist allerdings problematisch, da gesundheitsschädliche Dämpfe auftreten.

Problematisch ist ferner, Garn der Naht geeignet schnell mit einem vertretbaren Kostenaufwand verschweißen zu können, um so die stoffschlüssige Verbindung von Garn unmittelbar im Anschluss an das Vernähen in einem Arbeitsgang herstellen zu können. Versuche haben gezeigt, dass dies beispielsweise nicht oder nicht mit einem vertretbaren Kostenaufwand möglich ist, wenn infrarote Strahlung, Ultraschall, Laserlicht, eine Flamme eines Brenners oder eine temperierte Walze für das Verschmelzen oder Verschweißen eingesetzt wird. So kann beispielsweise mit Hilfe eines Lasers zwar schnell und präzise genug gezielt aus thermoplastischem Material bestehendes Garn mit angrenzendem Garn der Naht und/ oder aber mit einer aus einem thermoplastischem Material bestehenden Bahn des First- und Gratbands direkt im Anschluss an das Nähen verschmolzen werden. Allerdings steigen dann die Herstellungskosten relativ stark an, da ein Verschweißen mit Laser relativ teuer ist. Mit anderen bekannten kostengünstigeren Verfahren ist es grundsätzlich nicht möglich, die Wärmezufuhr hinreichend genau zu steuern, ohne das beispielsweise wegen zu großer Hitze Bereiche bzw. Abschnitte unerwünscht beschädigt werden. Teilweise scheitern bekannte Verfahren auch daran, dass diese relativ viel Platz benötigen und daher ungünstig sind.

Es hat sich aber überraschend herausgestellt, dass ein kostengünstiges Verschweißen oder Verschmelzen mit der gewünschten Geschwindigkeit zuverlässig und genau genug möglich ist, wenn mit Hilfe eine CoronaEntladung ein Plasma erzeugt wird, welches in Richtung Naht gelenkt wird. Insbesondere wird das Plasma mit Hilfe von Druckluft mit beispielsweise 4-6 bar Düse zur Naht transportiert, um das gewünschte Verschmelzen des Garns mit einem angrenzenden Bereich zu bewirken.

Weiter wurde festgestellt, dass es nicht erforderlich ist, ein Garn mit Öl zu tränken, wenn dieses aus Polypropylen besteht. Besteht das Garn aus Polypropylen, so entfällt nicht nur eine Tränkung mit Öl, was Kosten spart. Es hat sich herausgestellt, dass außerdem mit Geschwindigkeiten von mehr als 12 m/min vernäht werden kann, ohne dass das Garn ständig reißt. Nähgeschwindigkeiten von bis zu 15 m/min sind möglich und zwar vor allem dann, wenn das Gewebe der einen Bahn ebenfalls aus Polypropylen besteht. Das Verschweißen mittels Plasma ist bis zu dieser Geschwindigkeit möglich. Wird aus Polypropylen bestehendes Garn verwendet, so werden außerdem auch noch Materialkosten eingespart.

Als besonders gut geeignet hat sich ein aus Propylen bestehendes Garn erwiesen, welches ein Längengewicht zwischen 1800 und 2600 dtex aufweist und dessen Durchschnittsfestigkeit 6 bis 7 cN/dtex beträgt.

Um örtlich präzise, schnell und genau genug das Plasma zuführen zu können, erfolgt die Zuführung der Druckluft durch eine Düse hindurch, die insbesondere zugleich als freistrahlende Elektrode ausgestaltet ist, die also keine masseführende Gegenelektrode benötigt. In diesem Fall erzeugt ein Generator eine Hochspannungsentladung in der Elektrode. Das dabei entstehende Plasma wird insbesondere mittels Druckluft auf die zu behandelnde Oberfläche übertragen. Ein spezielles Gas, so zum Beispiel ein inertes Schutzgas, welches zusätzlich zur Umgebungsluft eingesetzt wird, wird nicht benötigt.

Eine geeignete Vorrichtung für das Verschmelzen bzw. Verschweißen mittels Plasma wird beispielsweise von der deutschen Firma Arcotec GmbH unter der Marke Arcospot® u. a. über das Internet
(hitp://www.arcotec.com/arcospot.htm, Stand 23. Januar 2009) kommerziell angeboten. Es ist bekannt, mit dieser Vorrichtung eine Oberfläche vorzubehandeln, damit sich Druckfarben, Lacke oder Klebstoffe an die vorbehandelte Oberfläche verbessert anbinden lassen. Eine derartige Vorrichtung für das Verschmelzen von Kunststoffen einzusetzen, um so zu stoffschlüssigen Verbindungen zu gelangen, ist nicht bekannt.

Regelmäßig wird für eine Oberflächenvorbehandlung sogenanntes kaltes Plasma eingesetzt, welches aktiv gekühlt wird. Eine solche aktive Kühlung ist beim erfindungsgemäßen Verschmelzen nicht vorgesehen. Im Gegenteil wird in einer Ausführungsform der Erfindung die für die Zufuhr eingesetzte Druckluft sogar erwärmt so zum Beispiel auf eine Temperatur von 150°c bis 250°C, um so das Erreichen der gewünschten Schmelztemperatur zu unterstützen.

Bei dem erfindungsgemäßen Verfahren werden einerseits die Voraussetzungen für eine gute Anbindung geschaffen und andererseits in gewünschter Weise eine Schmelzverbindung erzielt Die Geschwindigkeit, mit der vernäht werden kann, muss nicht geändert werden, um in einem Arbeitsgang direkt im Anschluss an das Vernähen Garn der Naht in gewünschter Weise beispielsweise mit einem angrenzenden Garn der Naht oder aber mit einer angrenzenden Kunststoffbahn durch Schmelzen stoffschlüssig zu verbinden. Garn wird nicht vollständig aufgeschmolzen, da es genügt, wenn das Garn lediglich an einem benachbarten Bereich anhaftet.

Beim erfindungsgemäßen Verbinden ist es vor allem auch möglich, den Bereich genau einzugrenzen, der mit dem Plasma beaufschlagt werden soll. Es gelingt nämlich mit Hilfe von Elektroden mit kleiner Austrittsöffnung für das Plasma nebst Druckluft, den Bereich, auf den das Plasma auftrifft, auf einen Durchmesser von bis zu 1,5 mm zu beschränken. Es ist daher problemlos möglich, entlang einer beispielsweise 1,5 bis 3 mm breiten Bahn die Naht mit Plasma zu beaufschlagen, so dass an die Naht angrenzende Bereiche nicht großflächig unerwünscht dem Plasma ausgesetzt werden.

Erfindungsgemäß ist es ferner möglich, die Energiezufuhr sehr genau zu steuern. Dies gelingt einerseits durch Einstellung eines geeigneten Abstandes zwischen der Austrittsöffnung der Elektrode und der Naht. Die Energiezufuhr kann andererseits durch Erhöhen oder Senken der Leistung des Generators gesteuert werden. Auch steht das gewünschte Plasma sowie die benötigte Energie sofort mit dem Einschalten des Plasmagenerators bereit. Es bedarf also keiner Vorlaufzeiten. Wird der Plasmagenerator ausgeschaltet, so wird damit sofort das Aufschmelzen von thermoplastischem Material gestoppt. In einer Ausführungsform kann daher der Abstand zwischen einer Elektrode, mit der das Plasma erzeugt wird, und der Naht geändert werden, um so die Energiezufuhr einstellen und erforderlichenfalls korrigieren zu können.

Am Herstellungsort oberhalb der Naht muss Raum bereitgestellt werden, den die Elektrode(n) benötigt bzw. benötigen. Die Fläche des Fügebereichs, die mit dem Plasma zwecks Verschmelzen beaufschlagt werden soll, kann insbesondere durch die Größe der Öffnung der eingesetzten Elektrode gesteuert werden. Soll eine größere Breite erfasst werden, so wird anstelle einer Düse mit kleiner Austrittsöffnung beispielsweise die unter der Marke Arcojet® von der Firma Arcotec GmbH vertriebene Vorrichtung eingesetzt, aus der Plasma in etwa rechtseckförmig austritt, wobei zwei Seiten des Rechtecks wesentlich länger als die kurzen Seiten des Rechtecks sind.

Die Elektroden sind an einem Ende mit einer Zuleitung verbunden, über die die Elektroden mit Strom versorgt werden. Außerdem wird über diese Zuleitung Druckluft zugeführt. Der Teil der Vorrichtung (nachfolgend Generator genannt), mit dem die Druckluft sowie die erforderliche Spannung bereitgestellt wird, ist ebenfalls mit der Zuleitung verbunden und kann daher räumlich getrennt von den Elektroden aufgestellt werden. Es ist daher leicht möglich, bestehende Produktionsanlagen nachzurüsten, da der Generator getrennt von dem eigentlichen Produktionsort aufgestellt werden kann und lediglich die Elektroden nahe der Naht geeignet anzubringen sind.

Das First- und Gratband besteht insbesondere aus einer luftdurchlässigen, wasserabweisenden, nicht aus Metall bestehenden mittleren Bahn, die aus einem vorzugsweise thermoplastischen, biegsamen Gewebe gebildet ist. An beiden Längsseiten der mittleren Bahn sind aus Metall bestehende Außenbahnen befestigt und zwar durch die Naht mit stoffschlüssig befestigtem Garn.

Wird ein mit Öl getränktes Garn vernäht, so sind
Verarbeitungsgeschwindigkeiten von bis zu 12 Meter pro Minute (m/min) möglich. Die Herstellungsgeschwindigkeit liegt insbesondere bei wenigstens 8 Meter pro Minute. Obwohl die eingesetzten Garne mit Öl getränkt sind, gelingt die gewünschte stoffschlüssige Verbindung. Mit Öl getränkte Garne beispielsweise mit einem Klebstoff stoffschlüssig geeignet befestigen zu wollen, wäre deutlich problematischer.

In einer Ausführungsform der Erfindung werden überlappende Bereiche von miteinander zu verbindenden Bahnen zunächst mit einem preiswerten Montageklebstoff verklebt. Es werden so Fertigungsfehler während des Vernähens vermieden.

Um die Anforderungen an die Durchlässigkeit für Luft zu gewährleisten, liegt die mittlere Bahn insbesondere in Form eines Gewebes vor, wobei Kette und Schuss so dicht beieinander liegen, dass die gewünschte Wasser abweisende Wirkung auftritt, so dass auf das Gewebe tropfendes Wasser das Gewebe nicht durchdringt, sondern abfließt.

Bevorzugt besteht die mittlere Bahn aus Polypropylen, da Polypropylen grundsätzlich die nötige Oberflächenspannung im Vergleich zu Wasser bereitstellt, um ein Abfließen von Kondenswasser und dergleichen zu ermöglichen. Auch ist Polypropylen ein thermoplastisches Material, welches durch Zufuhr von Wärme geeignet mit Garn durch Schmelzen verbunden werden kann.

Die Kettenfäden der mittleren Bahn verlaufen parallel zum First- und Gratband und die Schussfäden senkrecht dazu. Die Kettenfäden bestehen im Bereich, der mit den Außenbahnen überlappt, insbesondere aus relativ steifem Kunststoffmaterial im Vergleich zu den Schussfäden. Um das Kunststoffmaterial, aus dem die Kettenfäden bestehen, verbiegen zu können, ist dann bei gleichen Dimensionen ein größerer Kraftaufwand im Vergleich zu dem Kunststoffmaterial, aus dem die Schussfäden bestehen, erforderlich. In der Praxis müssen insbesondere die Schussfäden in einer Richtung relativ leicht gebogen werden können, um die mittlere Bahn beispielsweise um einen First herum legen zu können.

Das Flächengewicht der mittleren Bahn beträgt in einer Ausführungsform der Erfindung 150 bis 250 g/m², so zum Beispiel 190 g/m², Es werden in einer Ausführungsform 80 bis 130 Kettenfäden, vorzugsweise 105 bis 115 Fäden pro 10 cm eingesetzt. Die Kettenfäden weisen in einer Ausführungsform einen Durchmesser von ca. 0,1 bis 1 mm, vorzugsweise 0,3 bis 0,7 mm auf.

In einer Ausführungsform der Erfindung sind Kettenfäden im Gewebe der mittleren Bahn paarweise aneinandergrenzend angeordnet und zwar insbesondere in dem Bereich, in dem Außenbahnen mit der mittleren Bahn überlappen. Die Kettenfäden können im Vergleich zum Schussfaden relativ steif sein, da ein First- und Gratband nicht entlang der Kette besonders biegsam sein muss. Der Durchmesser der Kettenfäden kann daher rund sein. Die Kettenfäden sind vorzugsweise vorgeschrumpft, um ein Schrumpfen im verlegten Zustand zu vermeiden.

Im Unterschied zum Kettenfaden ist der Schussfaden vorzugsweise flach ausgeführt und wird wellenförmig um die Kettenfäden bzw. Paare an Kettenfäden herumgeführt. Der Schussfaden ist beispielsweise 0,3 mm dick und beispielsweise ca. 1,2 mm breit. Die Schussfäden liegen relativ dicht aneinander und tragen so verbessert dazu bei, dass eine wasserabweisende Oberfläche entsteht.

Indem die Schussfäden relativ flach, also bandförmig sind, sind diese in der gewünschten Richtung biegsam, was dem Gewebe die nötige Flexibilität verleiht, um ein First- und Gratband um einen Giebel herum legen zu können. Zugleich ist die Biegsamkeit auch von Vorteil, um eine gewünschte Faltenbildung der mittleren Bahn in unten beschriebener bzw. aus der EP 0 911 459 A1 bekannten Weise durchführen zu können.

Darüber hinaus weist das First- und Gratband unterhalb der metallischen Folie vorzugsweise bekannte Kautschukmaterialien auf, so zum Beispiel Butyl, welches streifenförmig verläuft, wobei der Streifen schmaler ist im Vergleich zur Streifenbreite des metallischen Bereiches ist. Dieses Butylmaterial hat u. a. die Funktion, auf einem Dachziegel anzuhaften, um so das First- und Gratband in der gewünschten Lage zu halten. Um die Klebrigkeit zu erhalten bzw. Verschmutzungen zu vermeiden, wird dieses vorzugsweise durch eine Kunststofffolie abgedeckt. Die Kunststofffolie wird vor Gebrauch abgezogen, um dann das First- und Gratband mit den Dachziegeln in vorgesehener Weise zu verbinden. Ein solcher Klebstoffstreifen ist insbesondere wenigstens 1 mm dick, vorzugsweise wenigstens 2 mm, um eine dichte Verbindung zum Dach schaffen zu können.

Die Oberseite eines First- und Gratbandes bzw. die seitlichen Bereiche sind vorzugsweise farblich an die Farbe eines Daches angepasst. Beispielsweise wird eine orange oder rötliche Farbe gewählt, wenn die Dachziegel orange oder rötlich sind.

Die Unterseite der Außenbahnen des First- und Gratbandes ist dann vorzugsweise in einer anderen Farbe gewählt, die ebenfalls einer typischen Dachziegelfarbe gleicht, also beispielsweise braun oder schwarz. Dies hat zur Konsequenz, dass mit einer metallischen Außenbahn unterschiedliche Farben abgedeckt werden können. Bei der Produktion hat dies Vorteile. Wird ein First- und Gratband mit dunklen Randbereichen gewünscht, so wird die metallische Außenbahn entsprechend gedreht mit dem mittleren Bereich verbunden, um auf der Oberseite dann einen dunklen Farbton anstelle eines orangenen oder rötlichen Farbtons zu haben.

Die zu bevorzugenden Farben der Ober- bzw. Unterseite der Außenbahnen sind zum einen rötlich wie zum Beispiel rotbraun und zum anderen schwarz oder braun, um die gewünschten Farben abdecken zu können. Farben wie Gold, die aus dem Stand der Technik bekannt sind, werden daher vermieden, um aus vorgenannten Gründen kostengünstiger produzieren zu können. Es werden so insbesondere Lagerhaltungskosten eingespart.

Nach dem Stand der Technik weisen First- und Gratbänder in der Mitte einen verstärkten Bereich auf, beispielsweise durch ein Gewebeband, welches aufgeklebt ist. Dieses Gewebeband hat die Funktion, dem Dachdecker zu signalisieren, dass in diesem Bereich ein First- und Gratband auf einer First- oder Gratlatte zum Beispiel festgenagelt werden kann. Gleichzeitig soll die Verstärkung ein Ausreißen vermeiden. Ein so verstärkter mittlerer Bereich ist dann allerdings nicht hinreichend luftdurchlässig.

Es hat sich herausgestellt, dass bei Wahl der Gewebebahn mit paarweise angeordneten Kettenfäden, wie vorbeschrieben, ein zusätzliches Gewebeband entfallen kann, um einen mittleren Bereich hinreichend reißfest auszugestalten. Zwei Paare von Kettenfäden weisen dann untereinander einen Abstand von beispielsweise ca. 0,5 bis 1mm auf, um hinreichend luftdurchlässig zu sein. Daher wird ein mittlerer Bereich der mittleren Bahn in einer Ausführungsform durch anders gefärbte Schussfäden farblich hervorgehoben. Beispielsweise ist eine mittlerer, streifenförmiger Bereich rot markiert und die seitlichen Bereiche der mittleren Bahn sind grau gefärbt. Dadurch wird beispielsweise einem Dachdecker signalisiert, welcher Bereich der Befestigung dient.

In einer Ausführungsform umfasst ein First- und Gratband seitliche, aus Metall bestehende Bahnen, die wellenförmig in aus dem Stand der Technik bekannter Weise geformt sind und/ oder Falten aufweisen. Die metallischen Bahnen können dann relativ zur mittleren Bahn gestreckt und so in Vertiefungen von Dachziegeln und Dachpfannen hineingedrückt werden. Ein First- und Gratband umfasst in einer Ausführungsform Außenbahnen, die im Unterschied zur mittleren luftundurchlässig sind.

In Abhängigkeit vom Dach werden verschiedene Breiten einer First- und Gratband benötigt. Zum einen hängt dies mit der Dachschräge zusammen. Je schräger ein Dach ist, desto breiter muss ein First- und Gratband sein, um ordnungsgemäß angebracht werden zu können. Ein weiteres Kriterium ist die Form einer Dachpfanne bzw. eines Dachziegels. Je tiefer ein Dachziegel ist, um so breiter muss eine metallische Außenbahn sein. In Abhängigkeit vom jeweiligen Anwendungsfall werden die entsprechenden Breiten eingesetzt. First- und Gratbänder werden daher mit verschiedenen Breiten angeboten bzw. in verschiedenen Breiten benötigt. Die typischen Breiten sind 310 und 350 mm. Es gibt weiter Breiten von 210 mm, 370 mm und 390 mm.

Die mittlere Bahn ist daher in einer Ausführungsform der Erfindung gefaltet, wobei wenigstens eine Falte im fixierten Zustand entlang der Bahn verläuft. Die Faltung kann mit einem Klebstoff fixiert sein. Hierdurch wird erreicht, dass durch einfaches Auseinanderziehen sich wenigstens eine Faltung lösen kann und die mittlere Bahn so breiter wird, um verschiedene gewünschte Breiten erhalten zu können. Vorzugsweise wird die Fixierung einer Falte jedoch ebenfalls durch das Verbinden mittels Plasma erreicht, um besonderen zusätzlichen Fertigungsaufwand zu vermeiden.

In einer Ausführungsform der Erfindung sind wenigstens zwei der vorgenannten Falten vorgesehen, die unterschiedlich fest fixiert sind. Wird eine mittlere Bahn auseinander gezogen, so wird sich erst die eine Falte und im Anschluss daran die andere Falte in Abhängigkeit von der Kraft, die aufgewendet wird, entfalten. So stehen zwei weitere Zwischengrößen zur Verfügung, die lediglich davon abhängen, wie stark die mittlere Bahn auseinander gezogen wird.

In einer bevorzugten Ausführungsform der Erfindung wird die Fixierung der Falten lediglich punktuell bereitgestellt. Auf diese Weise wird vermieden, dass ein Klebefilm oder mittels Plasma verschmolzene Bereiche die Luftdurchlässigkeit zu stark vermindern. Durch lediglich punktuelle Verbindungen wird also gewährleistet, dass die gewünschte Durchlässigkeit von Luft im Falle eines Hitzestaus aufrecht erhalten wird.

In einer Ausführungsform der Erfindung ist der Abstand der punktuellen Verbindungen für die Fixierung einer ersten Falte kleiner im Vergleich zum Abstand der punktuellen Verbindungen für die Fixierung einer zweiten Falte. Dadurch wird sichergestellt, dass unterschiedliche Kräfte aufgewendet werden müssen, um erst eine erste Falte und anschließend eine zweite Falte zu lösen, um so das First- und Gratband in gewünschter Weise zu verbreitern.

Mit dem erfindungsgemäßen Verfahren, gemäß dem ein üblicherweise für eine Oberflächenbehandlung erzeugtes Plasma eingesetzt wird, können allgemein Verbindungen zwischen zwei nicht-metallischen Elementen wie zum Beispiel Materialbahnen geschaffen werden. Das mit einem Luftstrom zugeführte Plasma kann allerdings auch dem Verlöten dienen, also bei metallischen Verbindungen eingesetzt werden. Verbindungen können eine Naht mit Garn umfassen, welches erfindungsgemäß an einem benachbarten Bereich befestigt ist. Mit Hilfe des mittels eines Luftstroms zugeführten Plasmas können allerdings auch Bahnen oder andere geeignete Elemente wie Kunststoffplatten geschnitten werden, indem ein zu zerschneidender Bereich aufgeschmolzen und so getrennt wird. Da durch Schmelzen getrennt wird, verbleiben vorteilhaft keine scharfkantigen Grate. Wird das mittels einer freistrahlenden Elektrode erzeugte Plasma allgemein für das Verbinden oder Zerschneiden eingesetzt, so können solche Verfahren die genannten Ausführungsformen umfassen, so zum Beispiel das Beheizen von Luft, um eine gewünschte Temperatur einfacher und schneller bereitzustellen.

In den Zeichnungen ist ein Ausführungsbespiel eines erfindungsgemäßen First- und Gratbandes schematisch dargestellt, und zwar zeigt
- Fig. 1: eine perspektivische Ansicht des First- und Gratbandes in einer Verarbeitungsposition von schräg oben,
- Fig. 2: das erfindungsgemäße First- und Gratband in der Untersicht, mit teilweise abgezogener Abdeckfolie und
- Fig. 3: das erfindungsgemäße First- und Gratband in der Aufsicht.

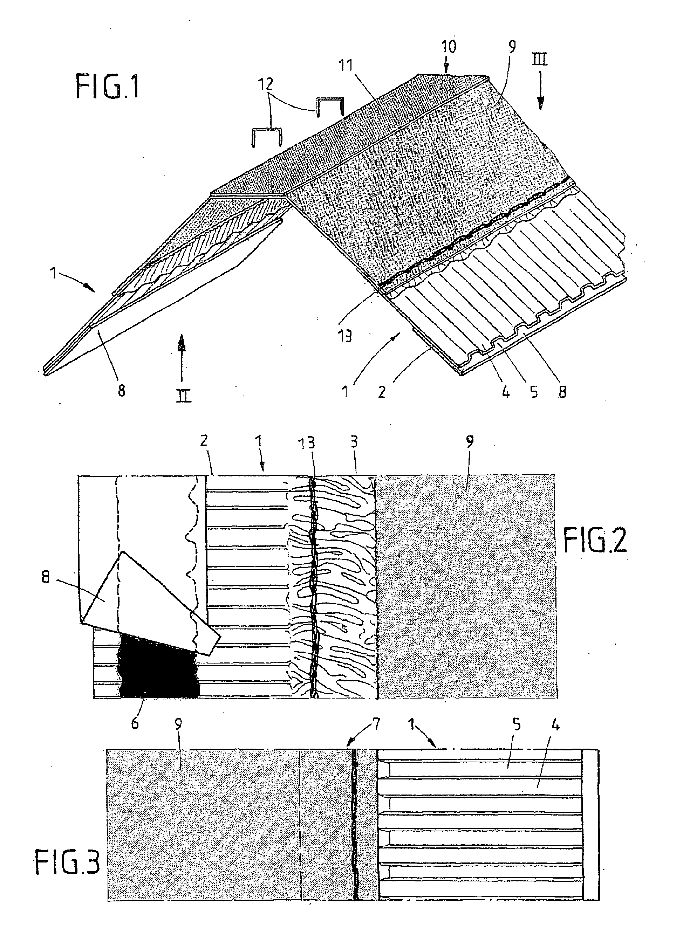

Das in den Figuren 1 bis 3 gezeigte erfindungsgemäße First- und Gratband zum Abdecken und Bedecken von Firsten und Graten weist eine aufrollbare, luftdurchlässige und wasserabweisende Bahn 9 aus z. B. Glasfasergewebe oder Polypropylengewebe auf, und zwei an ihren Längsseiten angeordnete Seitenstreifen 1 aus Metall, beispielsweise Aluminium, Kupfer oder Blei, die nach außen hin wellenförmig profiliert sind. Die luftdurchlässige Bahn 9 ist im Kopfbereich 10, wo die Vorrichtung z.B. durch Nägel 12 an den Firstbalken befestigt ist, entlang ihrer in Längsrichtung verlaufenden Mittellinie durch einen mittleren Streifen 11 aus z. B. Glasfasergewebe verstärkt, wobei der mittlere Streifen 1 1 vorteilhafterweise aus einem dickeren bzw. festeren Gewebe besteht als die luftdurchlässige Bahn 9, auf der er aufgebracht ist.

Beim Ausführungsbeispiel erfolgt die dauerhafte Verbindung vom äußeren Seitenstreifen 1 mit der Bahn 9 durch Verkleben und anschließendem Vernähen mittels einer aus Polypropylen bestehenden Naht 13. Die Naht weist auf der Oberseite parallel verlaufende Garne auf. Diese wurden entlang der Naht 13 mit dem Plamagenerator Arcospot® der Fa. Arcotec GmbH, Rotweg 24, D-71297 Mönsheim, miteinander stoffschlüssig verbunden.

Sind besondere Anforderungen an die Haltbarkeit gestellt, so kann die Naht 13 auch doppelt oder mehrfach vorgesehen sein.

Die Naht 13 ist vorteilhafterweise am äußeren Rand der luftdurchlässigen Bahn 9, nahe am gewellten Bereich 2 der Seitenstreifen 1 vorgesehen. In den Fügebereichen 7 ist die Bahn 9 beiderseitig mit den metallischen Bahnen bzw. Seitenstreifen 1 verbunden. Im wesentlichen ist ein jeder der beiden Seitenstreifen 1 senkrecht zu seiner Längsachse und Oberfläche gewellt, so dass sich obere Räume 4 und untere Räume 5 in jedem Seitenstreifen 1 ergeben. Im Fügebereich 7, in dem die luftdurchlässige Bahn 9 mit den Seitenstreifen 1 verbunden wird, ist der im übrigen Bereich gewellte Seitenstreifen gestaucht, so dass sich im gestauchten Bereich 3 eine im wesentlichen ebene und nicht gewellte Oberfläche ergibt. Der gewellte oder gefaltete Bereich 2 kann dagegen vorzugsweise bis auf die anderthalbfache Länge gedehnt werden, was günstig ist, um den Seitenstreifen 1 an das Profil der oberen Seite der Dachpfannen formschlüssig anpassen zu können.

Für eine wetter- und insektendichte Verbindung zwischen der erfindungsgemäßen Vorrichtung und den Abdeckplatten des Daches sorgt dabei eine Klebschicht, z. B. eine Butylbeschichtung 6, die im äußeren Seitenbereich der Seitenstreifen 1 auf der Unterseite zur Verklebung mit den Dachplatten vorgesehen ist. Um eine unerwünscht frühzeitige Verklebung, insbesondere eines aufgerollten First- und Gratbandes zu vermeiden, ist vor dem Einsatz die Klebebeschichtung 6 durch eine Abdeckfolie 8, welche vorzugsweise mit Silikon beschichtet ist, geschützt. Diese ist vor Montage der Vorrichtung abzuziehen.

In einem Ausführungsbeispiel wurde ein aus Polypropylen bestehendes Garn mit einem Längengewicht von 2200 dtex und einer Durchschnittsfestigkeit von 6,68 cN/dtex für das Vernähen verwendet. Das Garn war nicht mit Öl getränkt. Dennoch waren Verarbeitungsgeschwindigkeiten von 12 bis 15 m/min möglich. Verarbeitungsgeschwindigkeiten von 15 m/min wurden erzielt und zwar mit unterschiedlichen metallischen Seitenstreifen. Versuche wurden erfolgreich mit Seitenstreifen durchgeführt, die einer 0,12 mm dicken Aluminiumbahn, aus einer 0,1 mm dicken Kupferbahn sowie aus einer 0,2 mm dicken Bleibahn bestanden. In sämtlichen Fällen bestand die mittlere Bahn aus einem aus Polypropylen bestehenden Gewebe. Das Flächengewicht des Gewebes betrug ca. 190 g/m². Das Gewebe umfasste 111 Kettenfäden pro 10 cm und 60 Schussfäden pro 10 cm. Der Luftdurchlass des Gewebes betrug ca. 800 l/dm² pro Minute.

## Patentansprüche

1. First- und Gratband mit zwei Bahnen (1, 9), die miteinander vernäht sind, so dass ein Garn der Naht (13) zumindest abschnittsweise mit einem angrenzenden Bereich oder angrenzenden Bereichen entlang der Naht stoffschlüssig verbunden ist,
**dadurch gekennzeichnet, dass**
das Garn der Naht (13) aus einem thermoplastischen Material besteht, welches mittels einer Schmelzverbindung stoffschlüssig mit einer Bahn und/ oder mit Garn verbunden ist.

2. First- und Gratband nach Anspruch 1 mit einer mittleren, aus einem Gewebe bestehenden Bahn (9), zwei damit verbundenen seitlichen metallischen Bahnen (1) mit wellenförmiger Profilierung sowie Klebstoffbahnen unterhalb der metallischen Bahnen, wobei der Klebstoff aus einem Kautschukmaterial besteht und/ oder die Klebstoffbahn wenigstens 1 mm dick ist.

3. First- und Gratband nach einem der vorhergehenden Ansprüche,
**dadurch gekennzeichnet, dass** die mittlere Bahn mit den beiden Außenbahnen in einem Überlappungsbereich (7) verklebt ist.

4. First- und Gratband nach einem der vorhergehenden Ansprüche mit einer luftdurchlässigen Bahn (9), die paarweise angeordnete Kettenfäden und/ oder Kettenfäden mit kreisförmigem Durchmesser umfasst.

5. First- und Gratband nach einem der vorhergehenden Ansprüche mit einer luftdurchlässigen Bahn (9), die bandförmige Schussfäden umfasst.

6. First- und Gratband nach einem der vorhergehenden Ansprüche mit Außenbahnen (1), die an einer Seite rötlich oder orange und an der anderen Seite dunkel, insbesondere schwarz oder braun gefärbt sind.

7. First- und Gratband nach einem der vorhergehenden Ansprüche, bei dem das Garn sowie eine Materialbahn aus Polypropylen besteht.

8. Verfahren zur Herstellung einer Verbindung zwischen zwei Materialbahnen, indem in einer freistrahlenden Elektrode eine Hochspannungsentladung erzeugt wird, das dabei entstehende Plasma mittels eines Luftstroms auf einen zu verbindenden Fügebereich gelenkt wird, so dass **dadurch** eine Schmelzverbindung im Fügebereich (7) entsteht, wobei
zwei Bahnen entlang des Fügebereichs (7) miteinander vernäht werden **dadurch gekennzeichnet, dass** anschließend ein aus thermoplastischem Material bestehendes Garn der Naht (13) mittels der Schmelzverbindung mit Garn und/ oder mit einer Bahn verbunden wird.

9. Verfahren nach einem der beiden vorhergehenden Ansprüche, bei dem die Elektrode als Düse ausgestaltet ist, durch die Druckluft zugeführt wird, um so Plasma mittels eines Luftstroms dem zu verbindenden Fügebereich zuzuführen.

10. Verfahren nach einem der drei vorhergehenden Ansprüche, bei dem zwei metallische Bahnen (1) mit einer mittleren, luftdurchlässigen Bahn (9) verbunden werden.

11. Verfahren nach einem der vier vorhergehenden Ansprüche, bei dem das Garn aus Polypropylen besteht, nicht mit Öl getränkt ist und mit einer Geschwindigkeit von 12 bis 15 m/min vernäht wird.

## Claims

1. Strip for covering ridges and arris comprising two sheets (1, 9), which are sewn to each other such that a yarn of the seam (13) is bonded at least by sections to an adjacent region or adjacent regions along the seam coherently to the fabric,
**characterised in that**
the yarn of seam (13) is comprised of a thermoplastic material which is bonded to a sheet and/or to yarn by way of melt bonding coherently to the fabric.

2. Strip for covering ridges and arris according to claim 1 having a middle sheet (9) consisting of a woven fabric, two lateral metallic sheets (1) which are bonded therewith having undulated profile as well as adhesive sheets below the metallic sheets, the adhesive consisting of a rubber material and/or having 1 mm of thickness.

3. Strip for covering ridges and arris according to one of the preceding claims **characterised in that** the intermediate sheet is bonded with both exterior sheets in an overlapping region.

4. Strip for covering ridges and arris according to one of the preceding claims having an air-permeable sheet (9) comprising warp strands which are arranged In pairs and/or warp strands having a circular diameter.

5. Strip for covering ridges and arris according to one of the preceding claims having an air-permeable sheet (9) comprising ribbon-shaped weft strands.

6. Strip for covering ridges and arris according to one of the preceding claims having exterior sheets (1) which are on one side of reddish or orange colour and are of dark colour, especially black or brown, on the other side.

7. Strip for covering ridges and arris according to one of the preceding claims having the yarn as well as one sheet of material consisting of polypropylene.

8. A process for the manufacture of bonding between two sheets of material by generating a high voltage discharge in a freely radiating electrode, the plasma resulting therefrom will be guided by way of an airflow to a joint region which is to be bonded, thus giving rise to a melt bond In the joint region (7), two sheets being sewn together along the joint region (7), **characterised in that** subsequently a yarn of the seam (13) consisting of thermoplastic material will be bonded by way of meld bonding to the yarn and/or to one sheet.

9. The process according to one of the two preceding claims wherein the electrode is formed in a nozzle through which pressurized air will be provided to thereby feed plasma by way of an air flow to the joint region.

10. The Process according to one of the three preceding claims wherein two metallic sheets (1) are bonded to an intermediate air-permeable sheet (9).

11. The Process according to one of the four preceding claims wherein the yarn consists of polypropylene is not impregnated with oil and is sewn with a velocity of 12 to 15 m/min.

## Revendications

1. Bande pour la couverture de crête et arête avec deux feuilles (1, 9) qui sont cousues l'une à l'autre d'une manière qu'un fil de la couture (13) est joint au moins sectionnellement à une région adjacente ou des régions adjacentes le long de la couture dans une manière coherente au tissue,
**caractérisée par le fait que**
le fil de la couture (13) est compose d'un matériau thermoplastique qui est joint à une feuille et/ou au fil par joint de coulée dans une manière coherente au tissue.

2. Bande pour la couverture de crête et arête selon la reveindication 1 ayant une feuille intérmediaire (9) consistant en tissue, deux feuilles laterales métalliques (1) qui sont jointes à celle-ci ayant un profile onduleux, ainsi que des feuilles adhésives au-dessous des feuilles métalliques consistant en un matériau de caoutchouc et/ou la feuille adhésive a une épaisseur de 1 mm.

3. Bande pour la couverture de crête et arête selon l'une des revendications précédentes **caractérisée par le fait que** la feuille intermediaire est jointe à tous les deux feuilles exterieures dans une région de chevauchement.

4. Bande pour la couverture de crête et arête selon l'une des revendications précédentes ayant une feuille perméble à l'air (9) comprenant des fils de chaîne qui sont arrangés par paire et/ou des fils de chaîne ayant un diamètre circulaire.

5. Bande pour la couverture de crête et arête selon l'une des revendications précédentes ayant une feuille perméble à l'air (9) comprenant des fils de trame en forme de ruban.

6. Bande pour la couverture de crête et arête selon l'une des revendications précédentes ayant des feuilles exterieures (1) qui, sur une côté, ont une couleur rougeâtre ou orange et, sur l'autre côté, une couleur foncé, surtout une couleur noire ou brune.

7. Bande pour la couverture de crête et arête selon l'une des revendications précédentes dans laquelle le fil ainsi qu'une feuille de matériel consistent en polypropylène.

8. Procédé pour la fabrication d'un joint entre deux feuilles par la mise en oeuvre une décharge en haute tension dans une électrode irradiant librement, le plasma en résultant est conduit par un écoulement d'air à une région de joints qui est à joindre, et ainsi créer un joint de coulée (7), dans lequel deux feuille sont cousues l'une à l'autre le long de la région de joints (7), **caractérisé par le fait que** un fil de la couture (13), consistant en un matériau thermoplastique est joint par joint de coulée au fil et/ou à une feuille.

9. Procédé selon l'une des revendications précédentes dans lequel l'électrode est formée en tant qu'un embout par lequel l'air comprimé est alimenté à la région de joints qui est à joindre.

10. Procédé selon l'une des revendications précédentes dans lequel deux feuilles métalliques (1) sont jointes à une feuille Intermédiaire perméble à l'air (9).

11. Procédé selon l'une des revendications précédentes dans lequel le fil est composé de polypropylène, n'est pas imprégné avec de l'huile et est cousu avec une vitesse de 12 à 18 m/min.
